# EUROPEAN PATENT SPECIFICATION

(11) **EP 3 160 223 B1**
(45) Date of publication and mention of the grant of the patent: **03.11.2021**
(21) Application number: 15811839.8
(22) Date of filing: 23.06.2015
(51) Int. Cl.: A01K 5/02, A01K 39/012

(54) **FEED DISPENSING BOX**
GEHÄUSE ZUR FUTTERVERTEILUNG
BOÎTIER DE DISTRIBUTION D'ALIMENTS

(30) Priority: 24.06.2014 DK 201470384
(43) Date of publication of application: 03.05.2017
(73) Proprietor: DALTEC A/S, 6040 Egtved (DK)
(72) Inventor: HELLESØE DALL, Christian, 7100 Vejle (DK)
(74) Representative: Patrade A/S
(86) International application number: PCT/DK2015/050179
(87) International publication number: WO 2015/197073

(56) References cited:
- EP-A1- 0 010 342
- EP-A2- 0 910 944
- WO-A1-2006/097103
- CN-U- 202 232 480
- CN-U- 202 652 978
- CN-Y- 201 355 977
- DK-B- 133 075
- GB-A- 371 979
- US-A- 3 631 841
- US-A- 3 834 591
- US-A- 4 185 587
- US-A- 4 200 060
- US-A- 4 770 124
- None

## Description

### Field of the Invention

The present invention concerns a feed box of the kind indicated in the preamble of claim 1.

### Background of the Invention

Many prior art feed boxes of this kind are designed with a predominantly cylindrical container part that often includes a transparent container part - if the container is not made entirely of transparent material - such that the actual amount of feed content in the actual feed box/feed position always can readily be ascertained.

The container part is usually connected upwardly with an endless tube conveyor supplying feed to the feed box from a feed station. The container part is downwards designed with a funnel-shaped part with a discharge valve which e.g. includes a spherical valve body.

The spherical valve body is frequently operatively connected with a common control wire running along the tube conveyor such that the common control wire can operate one or more rows of feed boxes/feed positions. EP0910944 describes a feedstuff metering device. The metering device comprises a body connected at the top to a conveyor pipe, carrying the feedstuff from a centralized system of storage silos. The metering device has an inner cover adjustable in position in order to vary the measured quantity, and also a rotatable rod to effect the blocking and unblocking of the discharge cover. The metering device is provided with an upper cover detachable for maintenance purposes and in that the actuating rod of the discharge valve is linked to the drive means of the latter by means of an intermediate engagement and disengagement device which makes it possible to disable as required the discharge of a specific feeder of a battery of feeders. The body of the metering device carries on its outer part a clamp for the attachment of index cards and the like.

### Object of the Invention

It is the object of the invention to indicate an improved feed box of this type, and which by means of very simple technical means can provide a significantly improved operation of feed boxes of this type.

### Description of the Invention

The feed box according to the invention is peculiar in that the feed box is further provided with a control device adapted for either allowing the operative connection with the common control wire to open the discharge valve by lifting the valve body, or to prevent the operative connection with the common control wire from opening the discharge valve by lifting the valve body.

By simple technical means is hereby achieved an improved feed box of the type indicated in the introduction, with very significant improvements in use.

The indicated control device enables, apart from the described control between active and inactive coupling between the common control wire and the valve body by normal operation, that the feed box according to the invention may provide the daily operation in a pig stable with several useful advantages by very simple additional measures, as it will appear from the following.

By the feed box according to the invention, and according to independent claim 1 the control device is constituted by a cord or wire, one end of which being connectable with the common control wire, and the other end of which extending through an eyelet at the top of the valve body and out through an upper aperture at a side of the feed box, such that an outermost end part of the other end of the cord or wire is adapted to be fixed in an upper position corresponding to the operative connection between the common control wire and the valve body being inactive, or in a lower position corresponding to the operative connection between the common control wire and the valve body being active.

Preferably, the outermost end part of the other end of the cord or wire is adapted to be fastened to an external endless control cord or wire which at the outer side of the feed box is running around an upper reversing wheel and a lower reversing wheel such that by pulling one side of the endless control cord or wire, the fastening of the outermost end part of the other end of the cord or wire can be displaced between the upper position corresponding to the operative connection between the common control wire and the valve body being inactive, and the lower position corresponding to the operative connection between the common control wire and the valve body being active.

With the object of manual operation of the feed box according to the invention, it may be advantageous that the outermost end part of the other end of the cord or wire is provided with a handle capable of being fixed in the upper position corresponding to the operative connection between the common control wire and the valve body being inactive, or in the lower position corresponding to the operative connection between the common control wire and the valve body being active.

Alternatively, the feed box according to the invention can be designed such that the fastening of the outermost end part of the other end of the cord or wire by motorised rotation of at least one of the reversing wheels can be displaced between the upper position corresponding to the operative connection between the common control wire and the valve body being inactive, and the lower position corresponding to the operative connection between the common control wire and the valve body being active.

Moreover, in the case where the sow is to be persuaded into the box it may be an advantage that the feed box according to the invention is designed such that the actuation handle furthermore is arranged such as to be released from the lower position in order to release a small portion of feed by manually moving the handle downwards, thereby lifting the valve body off its associated valve seat.

The feed box according to the invention can be designed in a simple way such that the valve body is spherical or has a spherical lower part, interacting with a complementarily shaped valve seat.

With the object of actively counteracting obstructing bridge formations in the feed at the bottom of the feed box, it may advantageously be designed such that the valve seat is constituted by a plate-shaped valve seat which is foldable about one or more horizontal axes, and which is arranged to interact with complementary valve seat members at opposing sides of a lower part of the feed box.

An alternative feed box according to the invention may advantageously be designed such that the actuation handle consist of a wheel-shaped actuation handle arranged to be released from the lower active position and to be moved to the upper inactive position for signalling clearly that the feed box in question is in fact in the inactive mode, where a pull in the common control wire will not cause discharge of a portion of feedstuff to the below feeding position.

Preferably, the feed box according to the invention is designed such that said wheel-shaped actuation handle is made from plastic having a diverging signal colour and at a rear side comprises a drum adapted to wind up an end part of the actuation wire or cord.

### Description of the Drawing

The invention is explained more closely in the following with reference to the drawing, on which:
- Fig. 1: shows a perspective view of an embodiment of a feed box according to the invention;
- Fig. 2: shows a plan view of the feed box shown in Fig. 1, as seen from a side;
- Fig. 3: shows a plan view, partly in section, of the feed box shown in Fig. 1;
- Fig. 4: shows a perspective view of a second embodiment of a feed box according to the invention;
- Fig. 5: shows a plan view of the feed box shown in Fig. 4, as seen from a side;
- Fig. 6: shows a plan view, partly in section, of the feed box shown in Fig. 4;
- Fig. 7: shows a plan view, partly in section, of the feed box shown in Fig. 4;
- Fig. 8A: shows a schematic drawing of an actuation device with external handle for a feed box according to the invention, cf. e.g. Figs. 1 or 4;
- Fig. 8B: shows a schematic drawing of an alternative embodiment of an actuation device for a feed box according to the invention;
- Fig. 9: shows a perspective view of a third embodiment of a feed box according to the invention;
- Fig. 10: shows a further perspective view of the embodiment according to the invention, cf. Fig. 9;
- Fig. 11: shows a still further plane view of the embodiment according to the invention, cf. Fig. 9 - where a wheel-shaped handle is positioned in an upper position;
- Fig. 12A: shows a plane top view of the embodiment according to the invention, cf. Fig. 9
- Fig. 12B: shows a plane sectional view as seen along the section line A-A in Fig. 12A;
- Fig. 13A: shows a plane top view of the embodiment according to the invention, cf. Fig. 9 and turned some 45° in relation to Fig. 12A;
- Fig.13b: shows a plane sectional view as seen along the section line B-B in Fig. 13A;
- Fig. 14A: shows a plane front view of an embodiment of a wheel-shaped handle for a feed box according to the invention, cf. Figs. 9-13B;
- Fig. 14B: shows a plane edge view of the handle wheel cf. Fig. 14A;
- Fig. 14C: shows a perspective view of the handle wheel cf. Figs. 14A and 14B;
- Fig. 15A: shows a perspective view of a valve member according the invention, cf. e.g. Figs. 12B and 13B; and
- Fig. 15B: shows a plane side view of the valve member shown in Fig. 15A.

### Detailed Description of Embodiments of the Invention

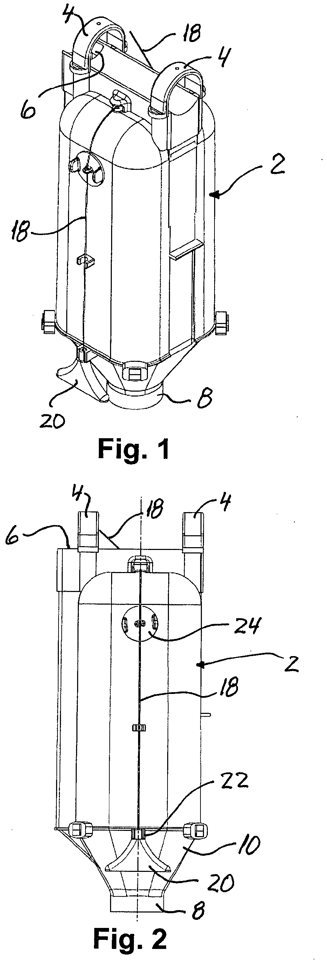

The feed box 2 shown in Figs. 1-3 is adapted upwardly for being connected to an endless tube conveyor by means of brackets 4 such that the feed box 2 is suspended under the tube conveyor and is supplied with feed from the tube conveyor via an upper supply opening 6.

At the bottom, the feed box 2 is connected with a feed position by a not shown down pipe connected with a lower discharge opening 8 which is formed in a lower funnel-shaped part 10 of the feed box such that a valve seat 12 for a downwardly spherical valve body 14 is formed at the transition between the funnel-shaped part 10 and the discharge opening 8.

The valve body 14 is upwardly provided with an eyelet 16 through which a flexible release wire or cord 18 is extending, of which one end is running upwards and connected with a common control wire running through the stable along the tube conveyor and operating one or more rows of feed boxes 2.

The opposite free end of the release wire or cord 18 is connected with an actuation handle 20 outside at one side of the feed box 2 and arranged to assume two positions, namely a lower position 22 corresponding to the valve body 14 being actively connected with the common control wire, and an upper positon 24 corresponding to the valve body 14 not being in active connection with the common control wire, i.e. an actuation pull in the common control wire will not act on the thus uncoupled valve body 14. The feed box 2 in question is thus disconnected from the common control wire as the connection between the former and the valve body 14 is extended in that the actuation handle 20 is disposed in the upper position 24.

The actuation handle 20 thus has an alternative function as the handle 20 can be released from the lower position 22 and moved manually downwards in order to lift the valve body 14, whereby an amount of feed can be dosed to a certain feed position, e.g. with the object of calming the animal or animals in the actual feed position.

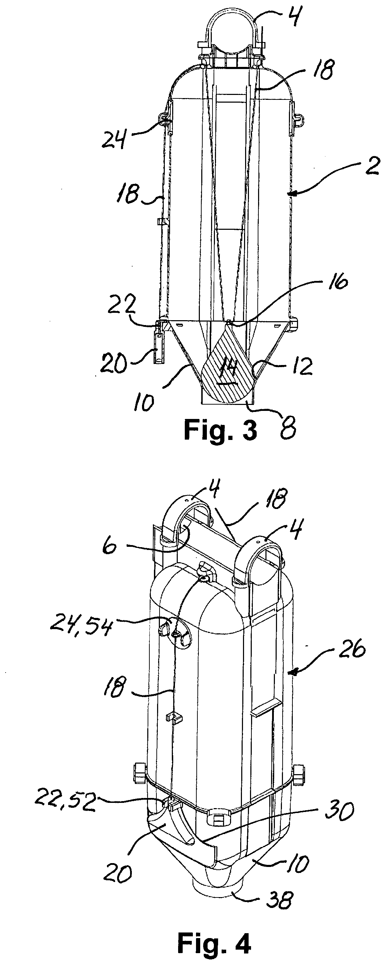

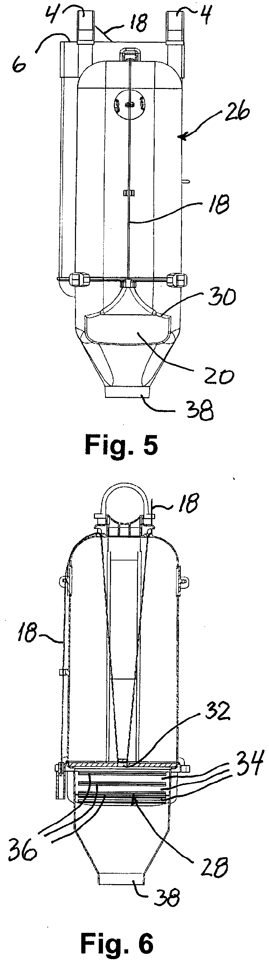

Figs. 4-7 show an alternative embodiment of a feed box 26 which upwardly has the same design as the feed box 2 cf. Figs 1-3, but which downwardly is provided with a foldable valve body 28 interacting with complimentarily shaped guide edges 30 inside opposing sides of the feed box 26.

The valve body 28 is upwardly provided with an eyelet 32 through which a slightly flexible release wire or cord 18 is extending, of which one end is running upwards and connected with a common control wire running through the stable along the tube conveyor, operating one or more rows of feed boxes 26. The opposing free end of the release wire or cord 18 is connected in the same way as described above with an actuation handle 20 that has the same function as described above.

When exerting a pull in the release wire or cord 18, either by means of the common control wire or by a downward pull in the actuation handle 20, the valve body 28 will be lifted upwards causing the valve body 28 to collapse under the action of gravitational force, since the valve body 28 consists of several plate members 34 that are interconnected by means of hinges 36. When the valve body 28 is folded, the content of the feed box 26 will therefore be discharged downwardly through a lower discharge opening 38.

When the valve body 28 subsequently is moved downwards again, the valve body 28 will again unfold and come into position along the complementary guide edges 30 at opposing inner sides of the feed box 26 such that the latter is closed again at the bottom.

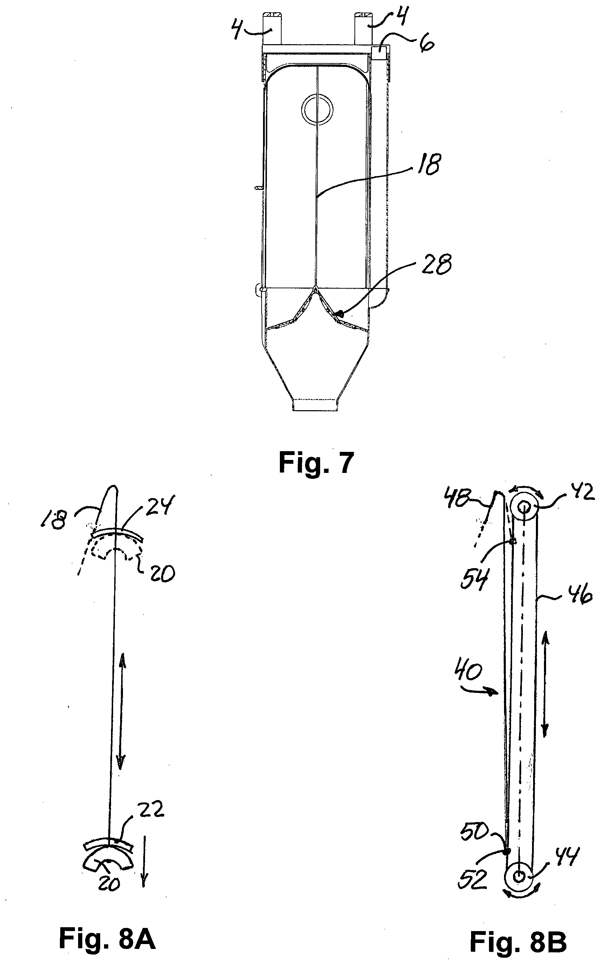

Fig. 8A shows a schematic drawing of the described actuation system with an actuation handle 20, whereas Fig. 8B shows an alternative actuation mechanism 40 consisting of the two reversing wheels 42, 44 and an endless wire or cord 46 running there around. A release wire or cord 48 is fastened to the left run of the wire or cord 46 at a connecting point 50 which by rotation of the reversing wheels 42, 44 can be displaced between the lower active position 52 shown by a solid line and an upper inactive position 54 shown by a broken line.

The actuation mechanism 40 can e.g. be motor powered by means of an electric motor built together with one of the reversing wheels 42 or 44. This will furthermore enable the actuation mechanism 40 to be arranged for remote control, e.g. by means of wireless remote control.

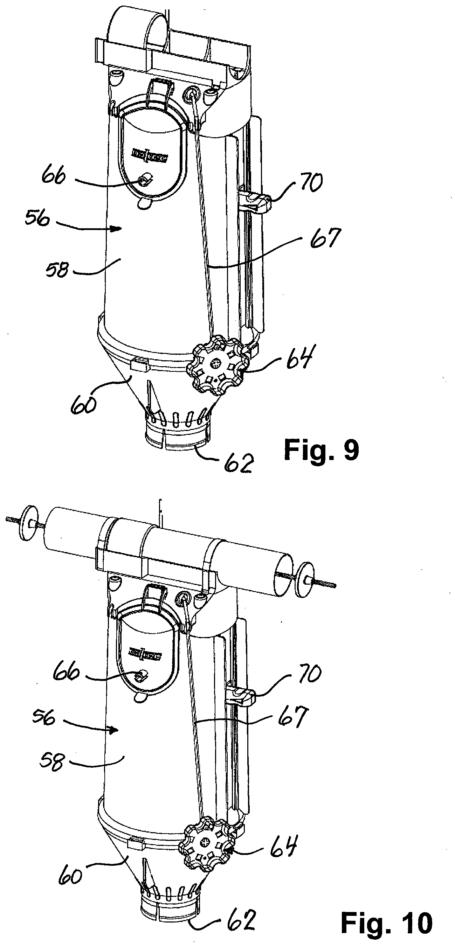

Figs. 9 - 13B show a third embodiment of a feed box 56 according to the invention by which a feed box body 58 generally has a circular cross section and comprises a funnel-shaped lower part 60 with an outlet 62 adapted to be connected to a not shown tube leding downwards to a feeding position.

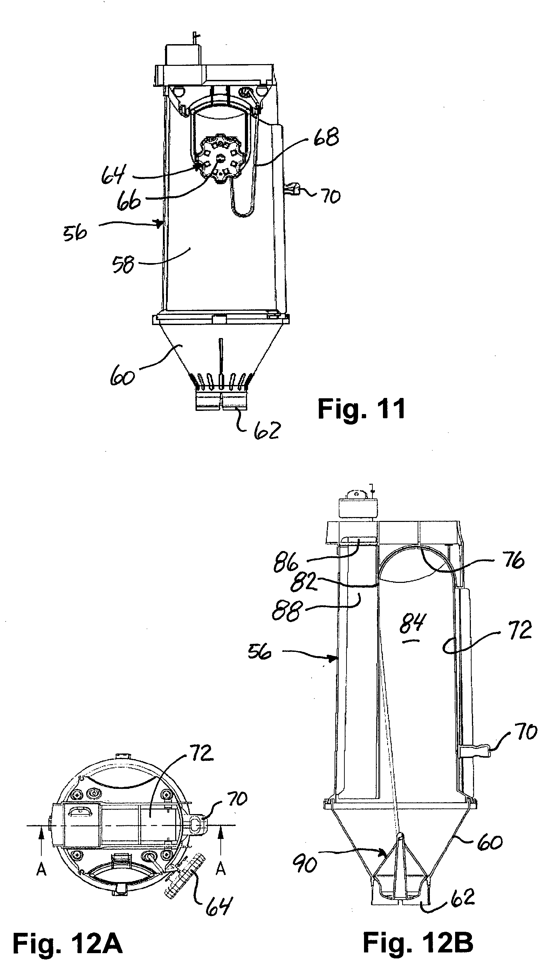

The feed box 56 also comprises a wheel-shaped actuation handle 64 being adapted to be positioned in an active lower position as shown in Figs. 9, 10, 12A, 13A and 13B and an upper inactive position 66 as shown in Fig. 11 where an activation cord or wire 67 is in a slack position 68 such that a pull in the common control wire will not cause emptying out of a feed portion to the feeding position.

Preferably, the wheel-shaped actuation handle 64 is made from plastic having a diverging colour in order to signal very clearly that the feed box 56 cf. Fig. 11 takes in an inactive situation where a pull in the common activation wire 18 will not cause emptying out of a feed portion at all, and that the feed box 56 cf. Figs. 9, 10 and 12A-13B takes in an active situation where a pull in the common control wire will cause emptying out of a feed portion to the below feeding position.

The sectional views of Figs. 12A-13B show a projecting regulating handle 70 positioned at a lower end of a bendable, narrow plate-shaped valve member 72 which at opposite longitudinal side edges 74 is guided in an upper guiding arch 76 between vertical guiding parts 78, 80.

The position of an end part 82 of the plate-shaped valve member 72 determine the amount of feedstuff feed into the interior feedstuff chamber 84 of the actual feed box 56 through an upper supply opening 86 of a vertical inlet channel 88 communicating with said interior feedstuff chamber 84.

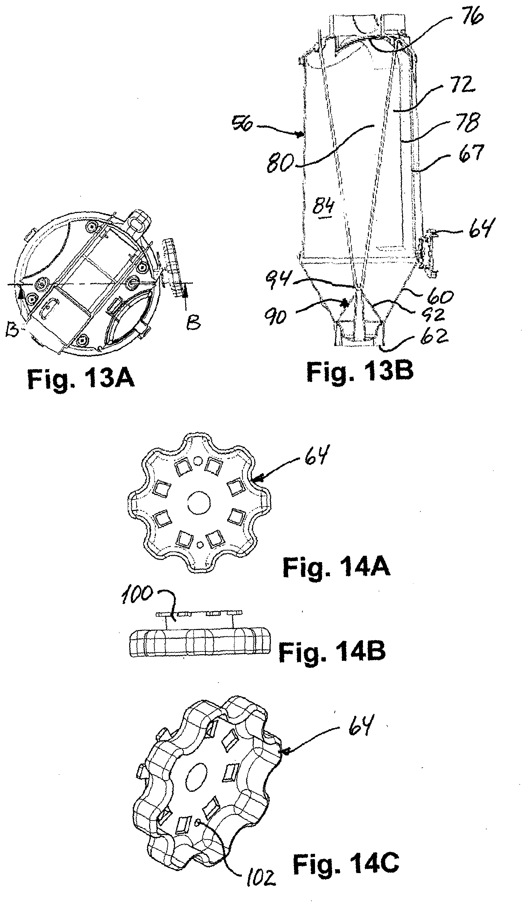

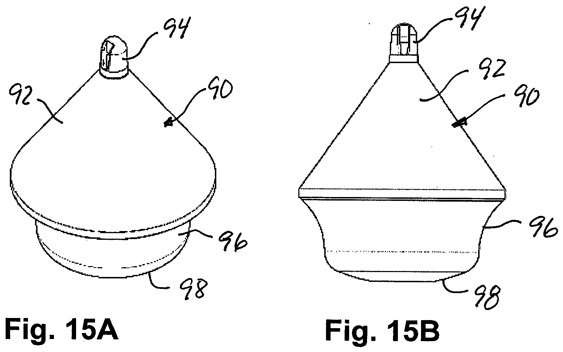

Fig. 13B shows among others an alternative configuration of a discharge valve body 90 (Figs. 15A-15B) comprising a cone-shaped top part 92 with an upper eyelet 94 and a lower convex part 96 having an arched bottom part 98.

Figs.14A-14C show the details of the wheel-shaped actuation handle 64 which as shown in Fig. 14B at the rear side which comprises a drum 100 adapted to wind up an end part of the release wire or cord 67. An end part of the release wire or cord 67 is lead through a fixating hole 102 in the body of the wheel-shaped actuation handle 64 and fixated by means of a knot at the outer side of the wheel-shaped actuation handle 64.

### Reference numbers of the drawing:

- 2: feed box
- 4: brackets
- 6: supply opening
- 8: discharge opening
- 10: funnel-shaped part
- 12: valve seat
- 14: valve body
- 16: eyelet
- 18: release wire or cord
- 20: actuation handle
- 22: lower active position
- 24: upper inactive position
- 26: feed box with plate valve
- 28: foldable valve body
- 30: guide edges
- 32: eyelet
- 34: plate members
- 36: hinges
- 38: discharge opening
- 40: actuation mechanism
- 42, 44: reversing wheel
- 46: endless wire or cord
- 48: release wire or cord
- 50: connecting point
- 52: lower active position
- 54: upper inactive position
- 56: feed box
- 58: feed box body
- 60: funnel-shaped lower part
- 62: outlet
- 64: wheel-shaped actuation handle
- 66: inactive position
- 67: release wire or cord
- 68: slack activation wire or cord
- 70: regulating handle
- 72: plate-shaped valve member
- 74: longitudinal side edges
- 76: upper guiding arch
- 78, 80: vertical guiding parts
- 82: end part of plate-shaped valve member
- 84: interior feedstuff chamber
- 86: upper supply opening
- 88: vertical inlet channel
- 90: discharge valve body
- 92: cone-shaped top part
- 94: upper eyelet
- 96: convex part
- 98: arched bottom part
- 100: drum
- 102: fixating hole

## Claims

1. A feed box (2, 26, 56) for supplying feedstuff portions and adapted to be connected to a feedstuff station via an endless tube conveyor serving a plurality of feed boxes in a livestock stable, the feed box (2, 26, 56) being provided with one or more upper supply openings (6, 86), a lower discharge valve and a lower discharge opening (8, 38, 62) which is connectable via one or more down pipes to a feeding position for one or more livestock, the discharge valve including a valve body (14, 28) which is operatively connectable with a common control wire running along an upper end of the feed box (2, 26, 56), the feed box (2, 26, 56) being further provided with a control device adapted for either allowing the operative connection with the common control wire to open the discharge valve by lifting the valve body (14, 28), or to prevent the operative connection with the common control wire from opening the discharge valve by lifting the valve body (14, 28), **characterised in that** the control device is constituted by a cord or wire (18, 48, 67), one end of which being connectable with the common control wire, and the other end of which extending through an eyelet (16, 32) at the top of the valve body (14, 28) and out through an upper aperture at a side of the feed box (2, 26, 56), such that an outermost end part of the other end of the cord or wire is adapted to be fixed in an upper position (24, 54, 66) corresponding to the operative connection between the common control wire and the valve body being inactive, or in a lower position (22, 52) corresponding to the operative connection between the common control wire and the valve body being active.

2. A feed box according to claim 1, **characterised in that** the outermost end part of the other end of the cord or wire (48) is adapted to be fastened to an external endless control cord or wire (46) which at the outer side of the feed box (2, 26, 56) is running around an upper reversing wheel and a lower reversing wheel (42, 44) such that by pulling one side of the endless control cord or wire (46), the fastening of the outermost end part of the other end of the cord or wire can be displaced between the upper position (54) corresponding to the operative connection between the common control wire and the valve body being inactive, and the lower position (52) corresponding to the operative connection between the common control wire and the valve body (14, 28) being active.

3. A feed box according to claim 1, **characterised in that** the outermost end part of the other end of the cord or wire is provided with an actuating handle (20) capable of being fixed in the upper position (24) corresponding to the operative connection between the common control wire and the valve body being inactive, or in the lower position (22) corresponding to the operative connection between the common control wire and the valve body being active.

4. A feed box according to claim 1 and 2, **characterised in that** the fastening of the outermost end part of the other end of the cord or wire is displaceable by motorised rotation of at least one of the reversing wheels (42, 44) between the upper position (54) corresponding to the operative connection between the common control wire and the valve body (14, 28) being inactive, and the lower position (52) corresponding to the operative connection between the common control wire and the valve body (14, 28) being active.

5. A feed box according to claim 1 and 3, **characterised in that** the actuation handle (20) furthermore is arranged such as to be released from the lower position (22, 52) in order to release a small portion of feed by manually moving the handle downwards, thereby lifting the valve body (14, 28) off its associated valve seat.

6. A feed box according to claim 1, **characterised in that** the valve body (14) is spherical or has a spherical lower part, interacting with a complementarily shaped valve seat.

7. A feed box according to claim 1, **characterised in that** the valve seat is constituted by a plate-shaped valve seat (28) which is foldable about one or more horizontal axes, and which is arranged to interact with complementary valve seat members (30) at opposing sides of a lower part of the feed box.

8. A feed box (56) according to claim land 3, **characterised in that** the actuation handle consist of a wheel-shaped actuation handle (64) arranged to be released from the lower active position and to be moved to the upper inactive position (66) for signalling clearly that the feed box (56) in question is in fact in the inactive mode, where a pull in the common control wire (18) will not cause discharge of a portion of feedstuff to the below feeding position.

9. A feed box (56) according to claim 8, **characterised in that** the wheel-shaped actuation handle (64) is made from plastic having a diverging signal colour and at a rear side comprises a drum (100) adapted to wind up an end part of the actuation wire or cord (67).

## Patentansprüche

1. Futterkasten (2, 26, 56) zum Bereitstellen von Futterportionen, der so ausgelegt ist, dass er mit einer Futterstation über einen Endlosschlauchförderer, der eine Vielzahl von Futterkästen in einem Viehstall versorgt, verbunden werden kann, wobei der Futterkasten (2, 26, 56) mit einer oder mehreren oberen Zufuhröffnungen (6, 86), einem unteren Ablassventil und einer unteren Ablassöffnung (8, 38, 62) versehen ist, die mit einem oder mehreren Fallrohren zu einer Futterposition für ein oder mehrere Tiere verbunden werden kann, wobei das Ablassventil einen Ventilkörper (14, 28) beinhaltet, der wirksam mit einer Zentralsteuerleitung verbunden werden kann, die entlang eines oberen Endes des Futterkastens (2, 26, 56) verläuft, wobei der Futterkasten (2, 26, 56) ferner mit einer Steuereinrichtung versehen ist, die so ausgelegt ist, dass sie es entweder der wirksamen Verbindung mit der Zentralsteuerleitung ermöglicht, das Ablassventil durch Anheben des Ventilkörpers (14, 28) zu öffnen, oder verhindert, dass die wirksame Verbindung mit der Zentralsteuerleitung das Ablassventil durch Anheben des Ventilkörpers (14, 28) öffnet, **dadurch gekennzeichnet, dass** die Steuereinrichtung aus einem Seil oder einem Draht (18, 48, 67) beschaffen ist, wobei ein Ende davon mit der Zentralsteuerleitung verbunden werden kann und wobei sich das andere Ende davon durch eine Öse (16, 32) an der Oberseite des Ventilkörpers (14, 28) und durch eine obere Öffnung auf einer Seite des Futterkastens (2, 26, 56) heraus erstreckt, so dass ein äußerstes Endstück des anderen Endes des Seils oder des Drahts so ausgelegt ist, dass es in einer oberen Position (24, 54, 66), die dem entspricht, dass die wirksame Verbindung zwischen der Zentralsteuerleitung und dem Ventilkörper inaktiv ist, oder in einer unteren Position (22, 52), die dem entspricht, dass die wirksame Verbindung zwischen der Zentralsteuerleitung und dem Ventilkörper aktiv ist, befestigt werden kann.

2. Futterkasten nach Anspruch 1, **dadurch gekennzeichnet, dass** das äußerste Endstück des anderen Endes des Seils oder des Drahts (48) so ausgelegt ist, dass es an einem externen endlosen Steuerseil oder -draht (46) befestigt werden kann, der an der Außenseite des Futterkastens (2, 26, 56) um ein oberes Umkehrrad und ein unteres Umkehrrad (42, 44) läuft, so dass durch Ziehen einer Seite des endlosen Steuerseils oder -drahts (46) die Befestigung des äußersten Endstücks des anderen Endes des Seils oder des Drahts zwischen der oberen Position (54), die dem entspricht, dass die wirksame Verbindung zwischen der Zentralsteuerleitung und dem Ventilkörper inaktiv ist, und der unteren Position (52), die dem entspricht, dass die wirksame Verbindung zwischen der Zentralsteuerleitung und dem Ventilkörper (14, 28) aktiv ist, verschoben werden kann.

3. Futterkasten nach Anspruch 1, **dadurch gekennzeichnet, dass** das äußerste Endstück des anderen Endes des Seils oder des Drahts mit einem Betätigungsgriff (20) versehen ist, der in der Lage ist, dass er in der oberen Position (24), die dem entspricht, dass die wirksame Verbindung zwischen der Zentralsteuerleitung und dem Ventilkörper inaktiv ist, oder in der unteren Position (22), die dem entspricht, dass die wirksame Verbindung zwischen der Zentralsteuerleitung und dem Ventilkörper aktiv ist, befestigt werden kann.

4. Futterkasten nach Anspruch 1 und 2, **dadurch gekennzeichnet, dass** die Befestigung des äußersten Endstücks des anderen Endes des Seils oder des Drahts durch motorisierte Rotation mindestens eines der Umkehrräder (42, 44) zwischen der oberen Position (54), die dem entspricht, dass die wirksame Verbindung zwischen der Zentralsteuerleitung und dem Ventilkörper (14, 28) inaktiv ist, und der unteren Position (52), die dem entspricht, dass die wirksame Verbindung zwischen der Zentralsteuerleitung und dem Ventilkörper (14, 28) aktiv ist, verschoben werden kann.

5. Futterkasten nach Anspruch 1 und 3, **dadurch gekennzeichnet, dass** der Betätigungsgriff (20) ferner so ausgelegt ist, dass er von der unteren Position (22, 52) gelöst werden kann, um eine kleine Portion Futter freizugeben, indem der Griff manuell nach unten bewegt wird, wodurch der Ventilkörper (14, 28) aus seinem zugehörigen Ventilsitz angehoben wird.

6. Futterkasten nach Anspruch 1, **dadurch gekennzeichnet, dass** der Ventilkörper (14) kugelförmig ist oder einen kugelförmigen unteren Teil aufweist, der mit einem komplementär geformten Ventilsitz zusammenwirkt.

7. Futterkasten nach Anspruch 1, **dadurch gekennzeichnet, dass** der Ventilsitz aus einem plattenförmigen Ventilsitz (28) beschaffen ist, der um eine oder mehrere horizontale Achsen faltbar ist, und der so ausgelegt ist, dass er mit komplementären Ventilsitzelementen (30) an gegenüberliegenden Seiten eines unteren Teils des Futterkastens zusammenwirkt.

8. Futterkasten (56) nach Anspruch 1 und 3, **dadurch gekennzeichnet, dass** der Betätigungsgriff aus einem radförmigen Betätigungsgriff (64) besteht, der so ausgelegt ist, dass er aus der unteren aktiven Position gelöst und in die obere inaktive Position (66) bewegt werden kann, um deutlich zu signalisieren, dass der betreffende Futterkasten (56) sich tatsächlich in dem inaktiven Modus befindet, in dem ein Zug in der Zentralsteuerleitung (18) nicht den Austritt einer Portion Futter an die darunterliegende Futterposition bewirkt.

9. Futterkasten (56) nach Anspruch 8, **dadurch gekennzeichnet, dass** der radförmige Betätigungsgriff (64) aus Kunststoff hergestellt ist, der eine unterschiedliche Signalfarbe aufweist, und an einer Rückseite eine Trommel (100) umfasst, die so ausgelegt ist, dass sie ein Endstück des Betätigungsdraht oder -seils (67) aufwickelt.

## Revendications

1. Boîtier d'alimentation (2, 26, 56) pour fournir des portions d'aliments pour animaux et conçu pour être relié à une station d'alimentation pour animaux par l'intermédiaire d'un transporteur tubulaire sans fin desservant une pluralité de boîtiers d'alimentation dans une étable, le boîtier d'alimentation (2, 26, 56) étant muni d'une ou de plusieurs ouvertures d'alimentation supérieures (6, 86), une soupape de décharge inférieure et une ouverture de décharge inférieure (8, 38, 62) qui peut être reliée par l'intermédiaire d'un ou de plusieurs tuyaux de descente à une position d'alimentation pour un ou plusieurs animaux d'élevage, la soupape de décharge comportant un corps de soupape (14, 28) qui peut être relié de manière fonctionnelle à un fil de commande commun s'étendant le long d'une extrémité supérieure du boîtier d'alimentation (2, 26, 56), le boîtier d'alimentation (2, 26, 56) étant en outre muni d'un dispositif de commande conçu soit pour permettre à la liaison fonctionnelle avec le fil de commande commun d'ouvrir la soupape de décharge en soulevant le corps de soupape (14, 28), soit pour empêcher la liaison fonctionnelle avec le fil de commande commun d'ouvrir la soupape de décharge en soulevant le corps de soupape (14, 28), **caractérisé en ce que** le dispositif de commande est constitué par un cordon ou un fil (18, 48, 67), dont une extrémité peut être reliée au fil de commande commun, et dont l'autre extrémité s'étend à travers un œillet (16, 32) au sommet du corps de soupape (14, 28) et sort à travers une ouverture supérieure au niveau d'un côté du boîtier d'alimentation (2, 26, 56), de sorte qu'une partie d'extrémité la plus à l'extérieur de l'autre extrémité du cordon ou du fil est conçue pour être fixée dans une position supérieure (24, 54, 66) correspondant à la liaison fonctionnelle entre le fil de commande commun et le corps de soupape étant inactive, ou dans une position inférieure (22, 52) correspondant à la liaison fonctionnelle entre le fil de commande commun et le corps de soupape étant active.

2. Boîtier d'alimentation selon la revendication 1, **caractérisé en ce que** la partie d'extrémité la plus à l'extérieur de l'autre extrémité du cordon ou du fil (48) est conçue pour être fixée à un cordon ou un fil de commande sans fin externe (46) qui, au niveau du côté extérieur du boîtier d'alimentation (2, 26, 56), s'étend autour d'une roue d'inversion supérieure et d'une roue d'inversion inférieure (42, 44) de sorte qu'en tirant sur un côté du cordon ou du fil de commande sans fin (46), la fixation de la partie d'extrémité la plus à l'extérieur de l'autre extrémité du cordon ou du fil peut être déplacée entre la position supérieure (54) correspondant à la liaison fonctionnelle entre le fil de commande commun et le corps de soupape étant inactive, et la position inférieure (52) correspondant à la liaison fonctionnelle entre le fil de commande commun et le corps de soupape (14, 28) étant active.

3. Boîtier d'alimentation selon la revendication 1, **caractérisé en ce que** la partie d'extrémité la plus à l'extérieur de l'autre extrémité du cordon ou du fil est munie d'une poignée d'actionnement (20) pouvant être fixée dans la position supérieure (24) correspondant à la liaison fonctionnelle entre le fil de commande commun et le corps de soupape étant inactive, ou dans la position inférieure (22) correspondant à la liaison fonctionnelle entre le fil de commande commun et le corps de soupape étant active.

4. Boîtier d'alimentation selon la revendication 1 et 2, **caractérisé en ce que** la fixation de la partie d'extrémité la plus à l'extérieur de l'autre extrémité du cordon ou du fil peut être déplacée par rotation motorisée d'au moins l'une des roues d'inversion (42, 44) entre la position supérieure (54) correspondant à la liaison fonctionnelle entre le fil de commande commun et le corps de soupape (14, 28) étant inactive, et la position inférieure (52) correspondant à la liaison fonctionnelle entre le fil de commande commun et le corps de soupape (14, 28) étant active.

5. Boîtier d'alimentation selon la revendication 1 et 3, **caractérisé en ce que** la poignée d'actionnement (20) est en outre agencée pour être libérée de la position inférieure (22, 52) afin de libérer une petite portion d'aliments en déplaçant manuellement la poignée vers le bas, soulevant ainsi le corps de soupape (14, 28) de son siège de soupape associé.

6. Boîtier d'alimentation selon la revendication 1, **caractérisé en ce que** le corps de soupape (14) est sphérique ou présente une partie inférieure sphérique, coopérant avec un siège de soupape de forme complémentaire.

7. Boîtier d'alimentation selon la revendication 1, **caractérisé en ce que** le siège de soupape est constitué par un siège de soupape en forme de plaque (28) qui peut être plié autour d'un ou de plusieurs axes horizontaux, et qui est agencé pour coopérer avec des éléments de siège de soupape complémentaires (30) au niveau de côtés opposés d'une partie inférieure du boîtier d'alimentation.

8. Boîtier d'alimentation (56) selon la revendication 1 et 3, **caractérisé en ce que** la poignée d'actionnement est constituée d'une poignée d'actionnement en forme de roue (64) agencée pour être libérée de la position active inférieure et pour être déplacée vers la position inactive supérieure (66) afin de signaler clairement que le boîtier d'alimentation (56) en question est bien dans le mode inactif, où une traction sur le fil de commande commun (18) ne provoquera pas la décharge d'une partie d'aliments pour animaux vers la position d'alimentation inférieure.

9. Boîtier d'alimentation (56) selon la revendication 8, **caractérisé en ce que** la poignée d'actionnement en forme de roue (64) est fabriquée à partir de plastique ayant une couleur de signal divergente et comprend au niveau d'un côté arrière un tambour (100) conçu pour enrouler une partie d'extrémité du fil ou du cordon d'actionnement (67).
